# FASCICULE DE BREVET EUROPEEN

(11) **EP 1 931 685 B1**
(45) Date de publication et mention de la délivrance du brevet: **03.08.2011**
(21) Numéro de dépôt: 06808115.7
(22) Date de dépôt: 12.09.2006
(51) Int. Cl.: C07F 5/00, G01N 33/00

(54) **PROCEDE D'OBTENTION DE COMPLEXES DE LANTHANIDES HAUTEMENT LUMINESCENTS**
VERFAHREN ZUR GEWINNUNG STARK LUMINESZIERENDER LANTHANIDKOMPLEXE
METHOD FOR OBTAINING HIGHLY LUMINESCENT LANTHANIDE COMPLEXES

(30) Priorité: 15.09.2005 FR 0509444
(43) Date de publication de la demande: 18.06.2008
(73) Titulaire: COMMISSARIAT A L'ENERGIE ATOMIQUE, 75015 Paris (FR)
(72) Inventeur: MAZZANTI, Marinella, F-38950 St Martin Le Vinoux (FR)
(74) Mandataire: Boubal, Denis Henri Jacques
(86) Numéro de dépôt international: PCT/FR2006/002089
(87) Numéro de publication internationale: WO 2007/031640

(56) Documents cités:
- PLATAS-IGLESIAS C, MATO-IGLESIAS M, DJANASHVILI K., MULLER R. N., VANDER ELST L., PETERS J. A., DE BLAS A., RODRÍGUEZ-BLAS T.: "Lanthanide Chelates Containing Pyridine Units with Potential Application as Contrast Agents in Magnetic Resonance Imaging" CHEMISTRY- A EUROPEAN JOURNAL, 2004, pages 3579-3590, XP002397229
- CHATTERTON N., GATEAU C., MAZZANTI M., PÉCAUT J., BOREL A., HELM L., MERBACH A.: "The effect of pyridinecarboxylate chelating groups on the stability and electronic relaxation of gadolinium complexes" DALTON TRANSACTIONS, 2005, pages 1129-1135, XP002397230

## Description

La présente invention concerne de nouveaux complexes de coordination d'un métal de transition, notamment des lanthanides, et leurs applications dans le domaine médical.

Les propriétés électroniques uniques des ions lanthanides, telles que leur luminescence à vie longue et leur spectre d'émission bien définis, font de ces composés un outil idéal pour leur utilisation dans le domaine médical.

En effet, l'utilisation des complexes de lanthanides, permet de distinguer la fluorescence considérée comme bruit de fond et le signal visé. Ainsi lesdits complexes sont souvent utilisés, dans la conception de détecteurs, comme sondes spectroscopiques et luminescentes pour résoudre des problèmes structuraux et analytiques et en tant que systèmes imageurs à fluorescence

Selon les règles émises par l' "Intemational Union of Pure and Applied Chemistry" (IUPAC), on entend par lanthanide la série des l'éléments chimiques allant du Cérium (Z=58) au Lutécium (Z=71). En Incluant le Lanthane (Z=57), ces éléments sont appelés lanthanoïdes. Le terme « terres rares » s'applique aux lanthanoïdes plus le Scandium (Z=21) et l'Yttrium (Z=39), ces derniers ayant des propriétés chimiques semblables. Dans la pratique, les appellations lanthanides, lanthanoïdes et terres rares sont utilisées pour décrire ces éléments.

En général, les lanthanides forment leurs composés les plus stables lorsqu'ils sont à l'état d'oxydation +3. La structure électronique des ions Ln^{III} est celle du Xénon pour le La^{III} et correspond ensuite au remplissage des orbitales 4f jusqu'à [Xe]4f¹⁴ pour le Lu^{III}.

Actuellement, la plupart des études réalisées avec des complexes de lanthanides ont été orientées vers l'établissement de sondes luminescentes contenant des émetteurs de lumière visible à vie longue, notamment le Eu^{III} et le Tb^{III}, ou des émetteurs du spectre du proche infrarouge, tels que le Pr^{III}, Er^{III}, Yb^{III} ou le Nd^{III}.

Cependant, comme la transition interdite 4f-4f, dite interdiction de Laporte, empêche excitation directe des lanthanides, celle-ci doit être effectuée à l'aide de certains chromophores organiques adéquats.

Au sens de l'Invention un « chromophore » est une molécule capable d'absorber la lumière UVA/isibie et de la transférer au centre métallique, lequel, en acceptant cette energie, devient « éxcité » à un état capable d'émettre la lumière (effet d'antenne). De préférence un « chromophores », dit aussi « antenne », correspond à un groupement d'atomes susceptible de participer à une séquence suffisamment longue de doubles liaisons conjuguées dans une molécule organique. Un cycle aromatique portant des électrons π délocalisables en α sera considéré comme un chromophore au sens de la présente invention.

Par ailleurs, pour des raisons pratiques dans des conditions physiologiques, les ions lanthanides doivent être incorporés dans des complexes hautement stables. En effet, l'efficacité du transfert d'énergie du ligand sur le lanthanide est décisive pour la conception de sondes hautement performantes.

En outre, afin d'obtenir un rendement quantique élevé il faut empêcher, ou tout au moins minimiser, une désexcitation non radiative de l'état excité de l'ion lanthanide en conséquence d'une interaction du métal avec les molécules d'eau environnantes.

L'incorporation des chromophores dans certains ligands polydentates étudiés à cet effet conduit à une plus grande stabilité des chélates de lanthanides en solution, permettant une plus grande protection du métal central vis-à-vis des molécules d'eau.

Cependant, la tendance des ions lanthanides à adopter un nombre de coordination élevé et leur manque de sélectivité stéréochimique fait de la conception de ces ligands un défi majeur.

Une stratégie, qui a été adoptée par différents groupes de recherche, est basée sur une structure à "tripode" d'un ligand afin d'organiser trois unités de liaison trivalents dans des complexes Ln^{III} ennéa-coordonnés.

Cette approche a conduit, dans certains cas, à une protection efficace du métal central vis-à-vis des molécules d'eau environnantes, mais les difficultés de synthèse la rendent peu intéressante.

La préparation des ligands polydentates, permettant l'arrangement de quatre groupements bidentates autour d'un ion lanthanide, a attiré moins l'attention des chercheurs malgré les propriétés de luminescence excellentes observées pour les tétra complexes obtenus à partir des ligands chromophores bidentates, tels que les quinolinates ou les tropolonates.

Récemment, des ligands octadentates comprenant quatre chromophores divalents ont conduit à des complexes de lanthanides avec des émissions d'énergie dans la zone du ultra-violet (UV) ou du spectre du proche infrarouge (NIR) très efficaces. voix Platas-Iglesias et al., Chemistry-A European Journal, 2004, 3579-3590

Toutefois, la structure de ces complexes n'a pas encore été élucidée, et le fait que la partie de la structure du ligand que lie les unités bidentates entre elles soit hautement flexible, sous-entend que la protection du métal central est loin d'être optimale.

Le but de la présente invention est de proposer de nouveaux complexes de coordination d'un métal de transition, notamment des lanthanides, qui pallient les inconvénients précités, particulièrement en ce qui concerne leur stabilité en milieu aqueux et leur flexibilité.

Un autre but de la présente invention est de proposer de nouveaux complexes de coordination d'un métal de transition, notamment des lanthanides, qui soient de préparation facile et qui présentent un rendement quantique de luminescence élevé.

Un autre but de la présente invention est de proposer de nouveaux complexes de coordination présentant des caractéristiques chimiques et photophysiques susceptibles d'être utilisés dans le domaine médical et biotechnologique.

D'autres buts et avantages de l'invention apparaîtront au cours de la description qui va suivre qui n'est donnée qu'à titre indicatif et qui n'a pas pour but de la limiter.

La présente invention concerne un complexe de coordination d'un métal de transition de formule générale (I) :
{(M(L)]×(H₂O)ₙ}ₚ dans laquelle:
   - M représente un élément appartenant au groupe des lanthanides, choisi parmi l'Europium et le Cerium
   - L représente un ligand chromophore décadentate
      , la N,N,N: N'- tetrakis[(6-carboxypyridin-2-yl)méthyl]-éthylènediamine
   - X représente un contre-ion, appartenant au groupe 1A du tableau périodique des éléments,
   - n représente le nombre de molécules d'eau d'hydratation,
   - p correspond aux nombre de monomères,
   - H₂O représente les molécules d'eau d'hydratation.

La présente invention concerne également un procédé de préparation d'un ligand tel que décrit plus haut, caractérisé en ce qu'il comprend la réaction

entre l'ester éthylique de 6-chlorométhypyridin-2yl carboxylate et l'éthylénediamine en milieu organique

La présente invention concerne en outre un procédé de préparation des complexes de coordination caractérisé en ce qu'il comprend la réaction entre le trichlorure d'europium ou le trichlorure de cérium et la N,N,N',N'-tetrakis[(6-carboxypyridin-2yl) méthyl]-éthyylénediamine en milieu aqueux, ainsi que leur utilisation dans le domaine médical, tel que dans l'imagerie diagnostiques radiothérapie, et dans la conception de capteurs de neutrons, écrans pour rayons X, des sondes pour imagerie et bio-essais, diodes, fibres optiques etc.

L'invention sera mieux comprise à la lecture de la description suivante, accompagnée des dessins en annexe parmi lesquels :
- la figure 1 représente un graphique de courbes de titration,
- la figure 2 représente la structure moléculaire d'un complexe de lanthanide,
- la figure 3 représente la structure moléculaire d'un second complexe de lanthanide,
- la figure 4 représente le spectre ¹H RMN d'un complexe de lanthanide,
- la figure 5 représente le spectre ¹H RMN d'un complexe de lanthanide à 333K,

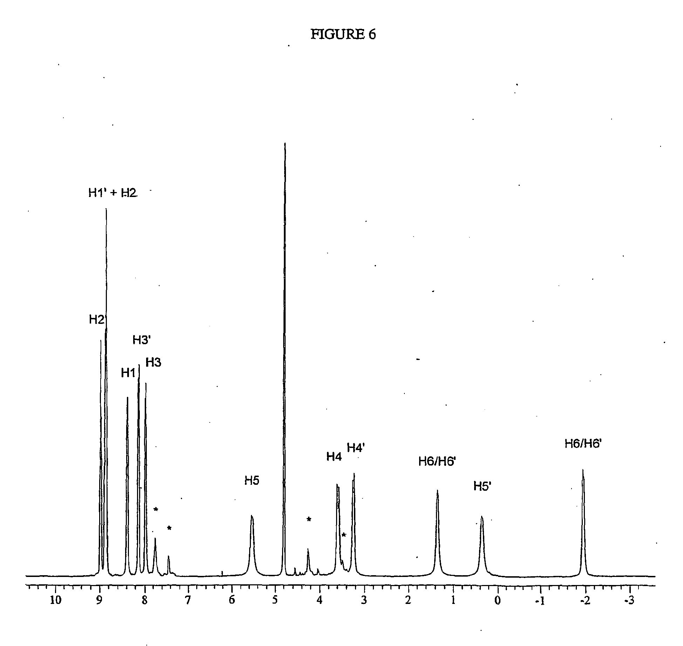

- la figure 6 représente le spectre ¹H RMN d'un complexe de lanthanide à 298 K
- la figure 7 représente le spectre d'émission de deux complexes de lanthanides après excitation à 274 nm,
- la figure 8 représente les spectres d'émission et d'excitation d'un lanthanide.

La présente invention concerne tout d'abord un complexe de coordination d'un métal de transition tel que défini à la revendication 1.

L'un des avantages de ce type de complexe de coordination réside dans leur stabilité en milieu aqueux qui permet leur utilisation dans des milieux physiologiques et biologiques et, donc, dans le domaine médical.

Le calcium, métal connu par son importance dans certains systèmes biologiques, est complexé moins fortement que les lanthanides par le ligand de la présente invention. Cette sélectivité est très importante pour l'application médicale. Un des avantages du ligard N,N,N',N'-tétrakis[(6-carboxypyridine-2-yl)methyl]-ethylènediamine, réside dans le fait qu'ils comprennent dix atomes donneurs d'électrons et un "squelette" constitué par un pont éthylènediamine parfaitement adapté à la compléxation de EU et Ce apportant une protection hautement effective du métal central par rapport aux molécules d'eau environnantes, notamment aux molécules d'eau du solvant. En conséquence de cette protection, les complexes de Eu^{III} avec le ligand N,N,N',N'-tétrakis[(6-carboxypyridine-2-yl)methyl]-ethylénediamine, présentent une luminescence dans l'eau à longue vie, associée à une haute solubilité et à une haute stabilité.

Selon la présente invention, le contre-ion X présent dans les complexes est un élément appartenant au groupe 1A du tableau périodique des éléments, et plus particulièrement le potassium. La façon dont le contre-ion K⁺ est lié aux complexes de l'europium et du cérium, conduit à deux structures différentes, une structure monomérique dans le cas du complexe avec l'europium et à une structure dimérique dans le cas du complexe avec le cérium.

La valeur de p varie selon le type de complexe et représente le nombre de monomères formant chacun des complexes, p est égal à un pour un complexe monomérique comme c'est le cas pour l'europium et p est égal à 2 pour un complexe dimérique comme c'est le cas pour le cérium (voir les exemples de réalisation).

De la même manière la valeur de n est fonction du complexe considéré et des conditions d'atmosphère et de température. Typiquement ce nombre sera compris entre 0 et 20 pour un complexe non dissout

L'invention concerne également la préparation d'un ligand chromophore décadentate tel que décrit à la revendication 6

Le procédé selon l'invention peut être réalisé dans tout solvant adapté, il s'agit notamment des solvants organiques comme l'acétonitrile, le tétrahydrofurane, le chloroforme, le dichloromethane, le tetrachlorure de carbone, le toluene.

Les conditions opératoires préférées sont aisément déterminées par l'homme du métier , la réaction de substitution par une amine étant bien connue de l'art. II est préférable de réaliser la réaction en présence d'une base pour faciliter la réaction de l'amine, puis d'acidifier le milieu réactionnel pour régénérer l'alcool protégé par le groupes éthyle.

Ainsi, selon le procédé, par réaction entre l'ester éthylique de la 6-chloromethylpyridine-2-carboxylate et l'ethylènediamine, de préférence en milieu organique, le ligand décadentate N,N,N',N'-tétrakis[(6-carboxypyridine-2-yl)méthyl]-ethylènediamine, aussi désigné dans la présente invention par H₄tpaen, est facilement obtenu en cinq étapes avec un rendement final de 26,0 %.

De façon schématique, la réaction peut être décrite comme suit:

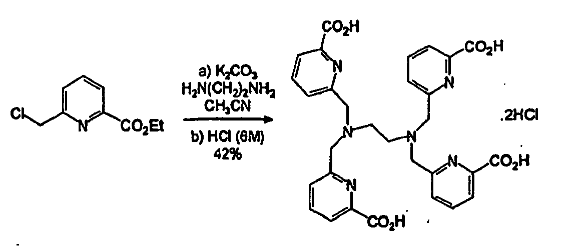

La préparation du ligand H₄tpaen est simple, peut être utilisée à grande échelle et peut être facilement modifiée pour ancrer le complexe avec certains groupements fonctionnels capables de se lier à des biomolécules afin de développer des marqueurs pour l'imagerie à luminescence.

Le ligand N,N,N',N'-tétrakis[(6-carboxypyridine-2-yl)methyl]-ethylènediamine peut être préparé de la façon suivante.

Sous une atmosphère d'argon, de l'éthylènediamine fraîchement distillée (250 mL, 3.6 mmol) et du K₂CO₃ anhydre (2.04g, 14.8 mmol) sont successivement additionnés à une solution d'ester éthylique de la 6-chloromethylpyridine-2-carboxylate (2.95 g, 14.8 mmol) dans l'acétonitrile anhydre (50 mL). Après filtration et évaporation du solvant une huile jaune est obtenue.

Après reprise dans le dichlorométhane la solution formée est lavée deux fois avec de l'eau (100mL) et séchée sur du Na₂SO₄ anhydre. Après évaporation du solvant, l'huile jaune obtenue est utilisée sans aucune autre purification.

Pour régénérer la fonction acide, le produit brut (2.56g) dissout dans une solution aqueuse de HCl 6M (40 mL) est porté au reflux pendant une nuit. Après évaporation du solvant jusqu'à 5 mL, la solution est refroidit à 5°C durant une nuit. Le précipité est collecté par filtration, lavé avec une solution de HCl 6M puis séché sous vide. 1.37g de H₄tpaen.6HCl.5H₂O sont ainsi obtenus avec un rendement de 42%.

L'analyse élémentaire du H₄tpaen.6HCl.5H₂O est la suivante: MM=909.33, C₃₀H₄₄N₆O₁₃Cl₆₁ C 39.42, H 4.88, N 9.24, trouvé C, 39.49, H 4.90, N 9.24.

Les spectres de RMN du H₄tpaen sont les suivants :
¹H RMN (D₂O, 400 MHz, 298 K, pH = 5): δ 3.57 (s, 4H, NCH₂CH₂N), 4.36 (s, 8H, NC*H*₂py), 7.48 (d, 4H, CH), 7.77 (d, 4H, CH), 7.84 (t, 4H. CH).
¹³ C RMN (D₂O, 100 MHz): δ= 51.6 (*C*H₂) ; 56.4 (*C*H₂) ; 57.8 (*C*H₂) ; 125.8 (*C*Hpy) ; 128.4 (*C*Hpy) ; 142.9 (*C*Hpy) ; 147.4 (*C*py) ; 152.0 (*C*py) ; 166.4 (*C*OOH) ; 172.1 (*C*OOH).

La présente invention concerne en outre un procédé de préparation d'un complexe de coordination par réaction d'un sel d'un lanthanide avec un ligand en milieu aqueux tel que défini à la revendication 7.

Les complexes solubles dans l'eau, obtenus à partir du ligand N,N,N',N'-tétrakis[(6-caroxypyridine-2-yl)methyl]-ethylénediamine, sont isolés avec un rendement compris entre 50 et 60% après réaction dudit ligand avec un chlorure de cérium ou d'europium et après un ajustement du pH à 6.

Ces complexes peuvent être préparés de la façon suivante.

Une solution de CeCl₃.7H₂O ou de EuCl₃.6H₂O (0.138 mmol) dans de l'eau (0.5 mL) est ajoutée à une solution de N,N,N',N'-tétrakis[(6-carboxypyridine-2-yl)methyll-ethylènediamine (0.138 mmol) à un pH 5, ajusté par l'addition de KOH (0.2 M), dans de l'eau (6mL). La solution ainsi obtenue est agitée à température ambiante pendant 2 heures et le pH est ajusté à 6 par l'addition supplémentaire de KOH (0.2 M).

Après évaporation de l'eau, le solide obtenu est repris dans EtOH (5 mL) et la solution est filtrée pour éliminer les sels insolubles. Le solvant est évaporé et le résidu repris dans l'eau.

Une évaporation lente sur 5 jours de la solution aqueuse (1mL) du solide permet d'obtenir le complexe ([Eu(tpaen)]K) sous la forme d'un solide blanc et le complexe ([Ce(tpaen)]K sous la forme d'un solide jaune avec un rendement compris entre 50 et 60%.

Les caractéristiques chimiques et physiques de ces complexes sont les suivantes :
[Eu(tpaen)] : ¹H RMN (D₂O, 400 MHz, 298 K, pD = 6.9): δ -2.07 (s br, 2H, H₆/H_{6'}), -1.11 (s br, 2H, H_{4'}), -0.99 (s br, 2H, H₄), 3.48 (s br, 2H, H₅), 4.28 (s br, 2H, H_{5'}), 4.41 (d br, 2H, H3'), 5.43 (d br, 2H, H₃), 5.65 (s br, 2H, H_{1'}), 5.79(s br, 2H, H₁), 5.96 (br, 2H, H_{2'}), 6.53 (br, 2H, H₂), 8.40 (br, 2H, H₆H_{6'}).
[Ce(tpaen)] : ¹H RMN (D₂O, 400 MHz, 298 K, pD = 5.4): δ -2.03 (s br, 2H, H_{6/}H_{6'}) , 0.09 (s br, 2H, H_{5'}), 1.18 (s br, 2H, H₆H_{6'},). 3.25 (d, 2H, H_{4'}) , 3.51 (d, 2H, H₄), 5.44 (s br, 2H, H₅), 7.97 (d, 2H, H₃), 8.10 (d, 2H, H_{3'}-), 8.45 (d, 2H, H₁). 8.91 (t, 2H, H₂), 8.94 (d, 2H, H₁ 9.04 (t, 2H, H_{2'}).

Les données cristallographiques pour [Eu(tpaen)]K(H₂O)₃.4H₂O: C30H38EuKN6O15, M = 913.7, Monoclinique, groupe spatial P2(1)/n, a = 11.995(2) b = 14.539(3), c = 21.407(5) Å, β = 106.186(3) V = 3585.2(12) Å³, Z = 4, ρ_{c} = 1.693 g cm⁻³, µ = 1.944 mm⁻¹, T = 298 K. Des 12504 réflexions recueillies, 5133 étaient uniques (Rᵢₙₜ = 0.0192). Traitement des données a convergé à R₁ = 0.0296, wR2 = 0.0667. Max/min de densité résiduelle 0.693 et -0.528 eÅ⁻³.

Les données cristallographiques pour {[Ce(tpaen)]K(H₂O)₃}₂.16H₂O, C30H46CeKN6O19, M = 973.95, Monoclinique, groupe spatial P2(1)/c, a = 11.7615(10) b = 14.5931(12), c = 22.965(2) Å, β = 101.640(1) V = 3860.7(6) Å³, Z = 4, ρ_{c} = 1.676 g cm⁻³, µ = 1.374 mm⁻¹ T = 193 K. Des 12929 réflexions recueillies, 7459 étaient uniques (Rᵢₙₜ = 0.0310). Traitement des données a convergé à R₁ = 0.0430, wR2 = 0.1340. Max/min de densité résiduelle 1.055 and -2.462 eÅ⁻³,

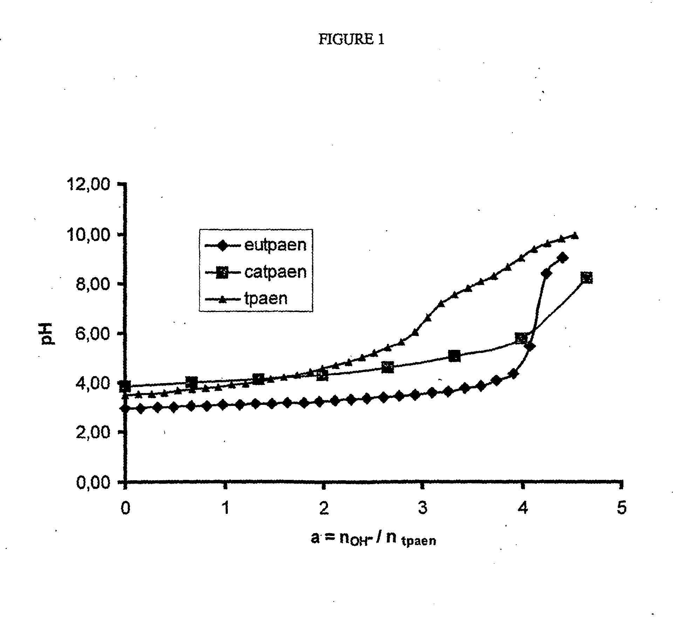

Par ailleurs, cinq constantes de déprotonation [pKₐ₁=2.8 (1), pkₐ₂=3.2 (1), pKₐ₃=3.9 (2), pKₐ₄=5.1 (1) et pKₐ₅=7.8 (1)] peuvent être déterminés pour le ligand H₆tpaen par titrage potentiométrique ainsi que les constants de stabilité des correspondants complexes de Eu^{III} et de Ca^{II} [logβ_{EuL}=15.3(3) pour le complexe de Eu^{III} et logβ_{CaL}=8.5 (5)]. La figure 1 montre les courbes de titration pour le ligand H₆tpaen (▲), pour le complexe Eutpaen (0) et pour le complexe Catpaen (■).

Les valeurs de pEu=15.7, pGd=15.0 et pCa=8.5 (-log[M]_{libre} à un pH de 7.4, [M]ₜₒₜₐₗ=1µM, et [tpaa]ₜₒₜₐₗ=10µM), lorsqu'elles sont comparées avec la valeur de pEu=14.0 pour l'acide éthylène diamine tétra acétique (EDTA) montrent que le ligand tpaen forme des complexes de lanthanides avec une stabilité suffisante pour leur utilisation *in vivo* et montrent également une bonne sélectivité vis-à-vis de l'europium par rapport au calcium.

Pour la titration potentiométrique, les solutions du complexe de Eu(III) peuvent être préparées par dissolution d'une quantité déterminée de EuCl₃.6H₂O dans de l'eau. Les constantes de déprotonation de H₆tpaen sont donnés par kₐₗ = [H₆₋₁L]²⁻¹/[H₅₋₁L]1¹⁻¹[H]⁺, et telles que déjà mentionnées précédemment, les valeurs obtenues sont _{P}Kₐ₁ = 2.8(1), pkₐ₂ = 3.2(1), pKₐ₃ 3.9(2), pKₐ₄ = 5.1(1) et pkₐ₅= 7.8(1).

La concentration exacte de l'ion Eu³⁺ a peut être determinée par titration colorimétrique dans un tampon d'acétate (pH=4.5), utilisant comme référence une solution de H₂Na₂edta et l'orange xylenol comme indicateur.

Les solutions de Ca(II) ont peuvent être preparées par dissolution de CaCl₂ dans de l'eau. La concentration exacte de l'ion Ca²⁺ peut être déterminée par titration colorométrique à un pH_{.}~ 12.5 utilisant comme référence une solution de H₂Na₂edta et la calgonite comme indicateur. 20 mL d'une solution de H₄tpaen(3.10⁻⁴ M), acidifiée (pH~2.5) 1:1 Ln:mélange de ligands ([L] 3.10⁻⁴ M), acidifiée (pH~2.5) 1:1 Ca:mélange de ligands ([L] 7.10⁻⁵M) sont titrés dans une cellule avec un thermostat (25.0°C +/- 0.1°C) sous argon après addition d'une solution de KOH 0.1 M.

La force ionique a été déterminée avec KCI (µ=0.1 M). Les titrations ont été effectuées avec un potentiomètre Metrohm 751 GPD Titrino équipé avec une électrode de pH à verre. Le système d'électrode a été calibré avant chaque mesure.

La force électromotive est donnée par l'équation E=*E*°+sp[H⁺] dans laquelle *E*° et s sont déterminés par titration d'une quantité connue de HCl avec 0.1 M KOH à µ=0.1 M (KCI), utilisant la zone de l'acide pour la titration. La valeur utilisée pour le produit ionique de l'eau a été pKw = 13.77. Plus de 50 points de données ont été recueillis pour chaque expérience.

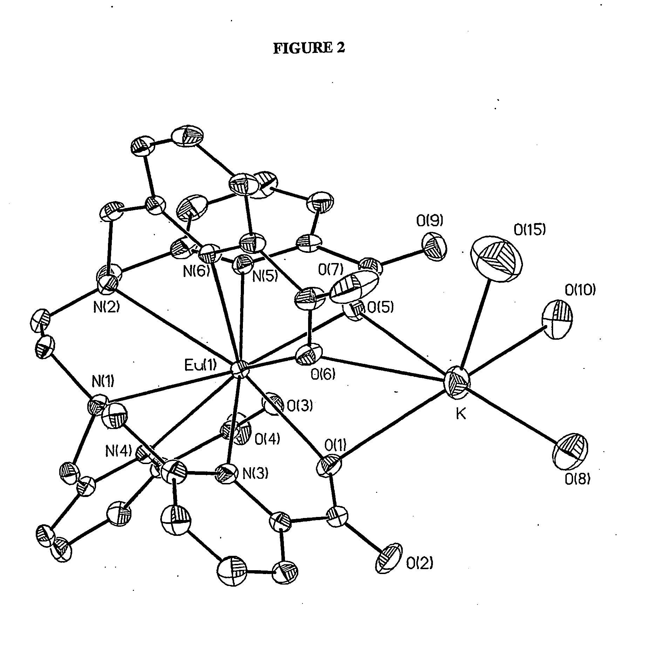

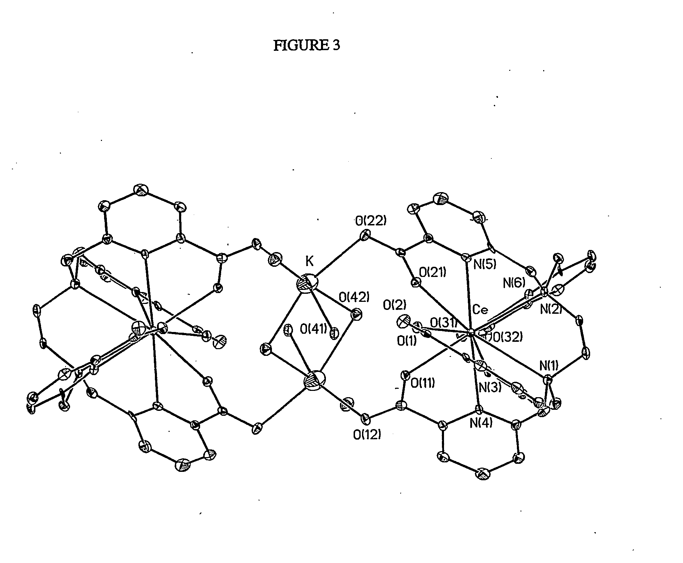

En outre, comme montrée aux figures 2 et 3, la structure cristalline respectivement des complexes [Eu(tpaen)]K(H₂O)₃.4H₂O, et {[Ce(tpaen)]K(H₂O)₃}₂·16H₂O est analysée par diffraction des Rayons X. Dans les deux complexes, l'ion Ln^{III} est déca-coordiné par les quatre atomes d'oxygène (la valeur moyenne pour les distances Métal-O est 2.42 (1) A pour l'europium et 2.50 (4) A pour le cérium) et par les six atomes d'azote (la valeur moyenne pour les distances Métal-N-pyridine est 2.65 (4) Å·pour l'europium et 2.72 (1) Å pour le cérium et la valeur moyenne pour les distances Métal-N-amine est 2.91 (1) Å pour l'europium et 2.91 (4) Å pour le cérium.

Le nombre de molécules d'eau coordonnées présentes en solution, *q*, a été déterminé à partir des mesures du temps de vie utilisant l'équation de Parker (*q* = A_{Ln}(1/τH₂O-1/τD₂O - α_{Ln}) dans laquelle A_{Tb}, = 5 ms, A_{Eu} = 1.2 ms, α_{Tb} = 0.06 ms⁻¹ et α_{Eu} = 0.25 ms⁻¹). Le rendement quantique Q a été calculé utilisant l'équation *Qₓ*/*Qᵣ = A,(v).nₓ².Dₓ lAₓ(v).nr2.Dᵣ,* dans laquelle x est l'échantillon, r la référence; *A* l'absorbance, *v* le nombre d'ondes d'excitation utilisé, *n* l'indice de refraction, et *D* l'intégral de l'intensité émise.

Les complexes de tris(dipicolinate) [Eu(dpa)₃³⁻] (Φ= 13.5%, 7.5x10⁻⁵ M in tampon Tris 0.1 M) et [Tb(dpa)₃]³⁻ (Φ= 26.5%, 6.5x10⁻⁵ M in tampon Tris 0.1 M) sont utilisés comme références respectivement pour la détermination des rendements quantiques des échantillons de Eu- and Tb. La consistance des données a été vérifiée mesurant le rendement quantique des complexes des tris(dipicolinate) par rapport à la rhodamine 101 (*Q_{abs}* = 100% en éthanol) et violet de cresyl (*Q_{abs}* = 54% en méthanol).

Les analyses chimiques et physiques des complexes selon la présente invention, montrent que les "bras" du groupement pyridinecarboxylate du ligand N,N,N',N'-tétrakis[(6-carboxypyndine-2-yl)methyl]-ethylénediamine entourent le métal central dans un arrangement pseudo symétrique C₂ et hélicoïdal.

Les deux complexes cristallisent en un mélange racémique d'énantiomères A et Δ.

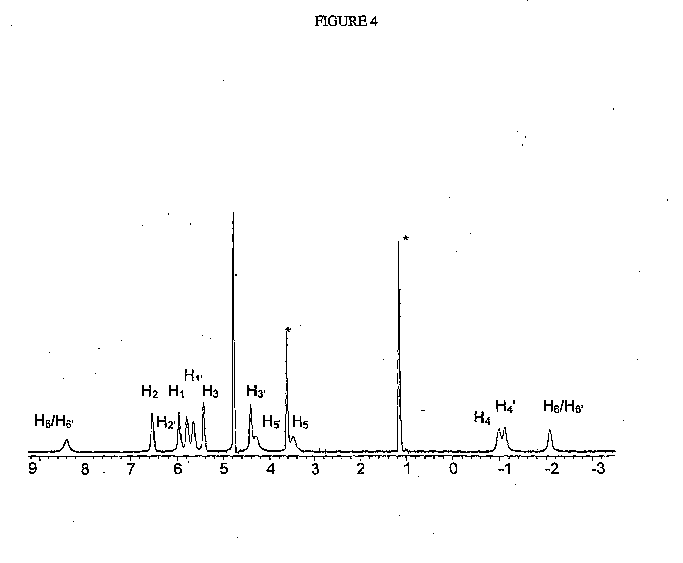

Les spectres de Résonance Magnétique Nucléaire (RMN) des complexes d'europium et du cérium, tels que montrés à la figure 4 pour le cas du complexe d'europium avec le ligand tpaen à 298 K, montrent que leur structure est compatible avec une symétrie rigide C2 dans laquelle les quatre « bras » du ligand restent coordonnés avec le métal pendant le temps d'obtention du spectre de RMN (*EtoH).

La symétrie observée est en concordance avec une structure chirale en double hélice en solution, similaire à celle rencontrée dans l'état solide.

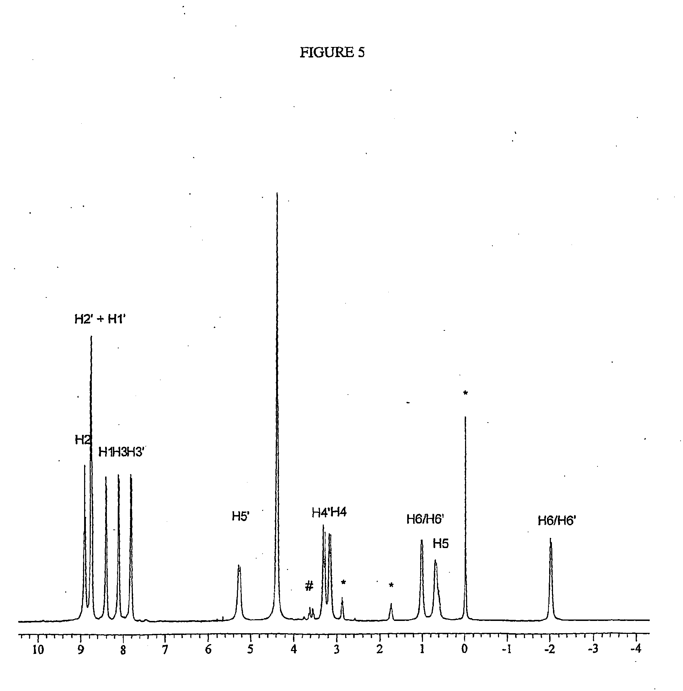

Les complexes gardent leur structure rigide dans une plage de température entre 298-363K, telle que montrée par les¹H RMN des figures 5 (* DSS ; # impureté) et 6 (* ligand libre), effectués respectivement à une température de 333 et de 298 K pour le cas particulier du complexe [Ce(tpaen)]⁻ en D₂O.

La présence d'une symétrie rigide C2 semblable à celle décrite ci-dessus a été également observée pour la même plage de températures pour les complexes de La et Tb préparés *in situ* dans de l'eau deuterée à un pH de 7.7. La forte rigidité de ces complexes en solution, très rarement observée pour les complexes de lanthanides avec un ligand à denticité élevée, indique que l'arrangement des dix atomes donneurs assurés par la simple chaîne ethylènediamine est bien adapté à la formation de complexes de lanthanides apportant une haute et effective protection au métal central vis-à-vis des molécules des solvants.

Comme résultats de cette protection, les complexes d' Eu^{III} et de Tb^{III} avec le ligand tpaen présentent une forte luminescence à vie longue dans de l'eau et dans de l'eau deuterée. Les temps de vie des niveaux Eu(⁵D₀) et Tb(⁵D₄) pour le [Eu(tpaen)]⁻ et [Tb(tpaen)]⁻ sont en concordance avec la présence de 0,04±0,2 et 0,03±0,2 molécules d'eau coordonnées respectivement dans les complexes Eu et Tb.

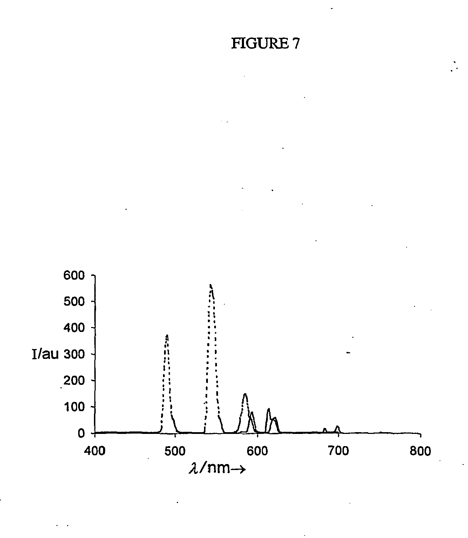

Les propriétés luminescentes des ions lanthanides, notamment Eu et Tb, sont donc largement améliorées par le ligand tpaen. La figure 7 montre le spectre d'émission de [Eu(tpaen)]⁻ (ligne pleine) et [Tb(tpaen)]⁻ (ligne pointillée) après excitation du ligand à 274 nm.

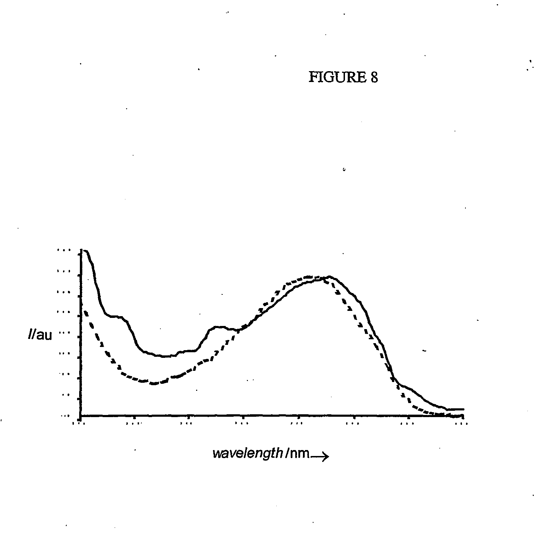

Un transfert d'énergie efficace du ligand sur le métal est mis en avant par la ressemblance entre les spectres d'excitation et d'absorption des complexes d'europium et de terbium. La figure 8 montre le spectre d'absorption (ligne pointillée) et le spectre d'excitation (ligne pleine) du complexe de [Tb(tpaen)]⁻ dans une solution tampon de Tris.

Le rendement quantique pour le complexe de [Tb(tpaen)]⁻(Φ=45%) mesuré par rapport au complexe de [Tb(dpa)₃]³⁻ dans une solution tampon de Tris aérée de concentration 0.1 M, avec une erreur expérimentale de 15%, est une des valeurs la plus élevée qui a été mentionnée jusqu'à nos jours. Le chromophore tpaen sensibilise également d'une façon efficace l'ion europium dont la valeur pour le rendement quantique est de 7%. Cette valeur, tout en étant plus basse que celle obtenue pour le complexe de Tub^{III}, reste toutefois plus élevée que le rendement quantique des complexes de lanthanides utilisés actuellement dans les sondes luminescentes commercialisées.

Telle que montrée dans le tableau suivant, l'intense luminescence de ces ions résulte d'un transfert efficace d'énergie du ligand sur le métal et d'une protection du métal central vis-à-vis d'une désactivation non radiative par les molécules d'eau environnantes.

| **compound** | **λ_{exc}(nm)** | **ε(M⁻¹cm⁻¹)** | **τ_{H2O}(ms)** | **τ_{D1O}(ms)** | **Φ_{H2O}** |
|---|---|---|---|---|---|
| **tpaen** | 270 | 15800 | | | |
| | | | | | |
| **Eu(tpaen)** | 274 | 21600 | 1.70(2) | 3.30(1) | 0.07 |
| | | | | | |
| **Tb(tpaen)** | 274 | 21632 | 3.0(1) | 3.75(1) | 0,45 |

Le temps de vie de la luminescence observée dans le complexe de terbium dans de l'eau, à la connaissance des inventeurs un de plus longs observé jusqu'à aujourd'hui, exclut la présence d'un processus de désexcitation comprenant le retour d'énergie du métal vers le ligand. Cette valeur pour le temps de vie est tout à fait compatible avec un niveau d'énergie de l'état triplet du complexe [Tb(tpaen)] similaire à celle récemment divulguée, (22988 cm⁻¹,) pour le complexe d'un ligand octavalent contenant deux groupements pyridinecarboxylate. Le rendement quantique élevé pour le complexe de terbium concorde bien avec cette valeur.

Les complexes de coordination selon la présente invention présentent plusieurs avantages. D'une part, cette approche directe pour agencer quatre chromophores divalents dans un ligand décadentate produit des complexes de lanthanides hautement solubles et stables à un pH physiologique. D'autre part, l'architecture du ligand conduit à une structure rigide dans laquelle le métal central est effectivement protégé des interactions avec les molécules du solvant.

En outre, cette approche ouvre une large variété de perspectives pour le développement des sondes stables et luminescentes dans la zone de l'ultraviolet-visible, infrarouge et proche infrarouge, utilisant ces composés, élaborés de préférence à partir de chromophores émettant une luminescence dans la zone de l'ultraviolet ou du proche infrarouge pour une utilisation dans imagerie médicale et dans les bioessais. Plus généralement le domaine médical, particulièrement celui des analyses médicales paraît pouvoir bénéficier de l'invention. Par ailleurs, les composés tels que décrits dans la présente demande peuvent être ancrés avec certains groupements fonctionnels capables de se lier à des biomolécules afin de développer des marqueurs pour l'imagerie à luminescence. Les complexes peuvent incorporer des fonctions de reconnaissance comme des dendrimères ou également être lié à des peptides, oligonucleotides, polymères, nanotubes.

L'invention concerne ainsi également une biomolécule ancrée sur un complexe selon l'invention, notamment pour servir comme sonde luminescente. Les complexes selon l'invention, de part leur propriétés, peuvent être employé dans l'industrie nanotechnologique et notamment dans des dispositifs nanotechnologiques comme des diodes ou des fibres optiques.

Naturellement, d'autres modes de mise en ouvre, à la portée de l'homme de l'art, peuvent être envisagés sans pour autant sortir du cadre de l'invention.

## Revendications

1. Complexe de coordination d'un métal de transition de formule générale (I) :
{[M(L)]X(H₂O)ₙ}ₚ
dans laquelle:
- M représente un élément appartenant au groupe des lanthanides, choisi parmi l'Europium, le Cerium
- L représente un ligand chromophore décadentate, la N, N, N', N' -tétrakis [(6-carboxypyridine-2-yl)méthyl]-éthylènediamine,
- X représente un contre-ion, appartenant au groupe 1A du tableau périodique des éléments.
- n représente le nombre de molécules d'eau d'hydratation,
- p correspond au nombre de monomères,
- H₂O représente les molécules d'eau d'hydratation.

2. Complexe selon la revendication 1 dans lequel l'élément appartenant au groupe des lanthanides est l'Europium.

3. Complexe selon la revendication 1, dans lequel l'élément appartenant au groupe des lanthanides est le Cérium.

4. Complexe selon l'une des revendications 1 à 3 dans lequel n est compris entre 0 et 20.

5. Complexe selon l'une des revendications 1 à 4, **caractérisé en ce que** le contre-ion est le potassium.

6. Procédé de préparation d'un ligand selon la revendication 1, **caractérisé en ce qu'**il comprend la réaction entre l'ester éthylique de la 6-chloromethylpyridine-2-carboxylate et l'ethylènediamine en milieu organique.

7. Procédé de préparation d'un complexe de coordination selon l'une quelconque des revendications 1 à 3, **caractérisé en ce qu'**il comprend la réaction entre le trichlorure d'europium ou le trichlorure de cérium et la N,N,N',N'-tétrakis[(6-carboxypyridine-2-yl)methyl]-ethylènediamine.

8. Utilisation des complexes selon l'une quelconque des revendications 1 à 5 dans des sondes luminescentes pour l'imagerie médicale ou des bioessais.

9. Utilisation d'un complexe selon l'une quelconque des revendications 1 à 5 dans un dispositif nanotechnologique.

## Claims

1. Coordination complex of a transition metal of general formula (I):
{[M(L)]X(H₂O)ₙ}ₚ
in which:
- M represents an element belonging to the lanthanide group, chosen from europium and cerium,
- L represents a decadentate chromophore ligand, N,N,N',N'-tetrakis[(6-carboxypyridine-2-yl.)methyl]-ethylenediamine,
- X represents a counter ion, belonging to group 1A in the periodic table of elements,
- n represents the number of hydration water molecules,
- p corresponds to the number of monomers,
H₂O represents the hydration of water molecules.

2. Complex according to claim 1, in which the element belonging to the lanthanide group is europium.

3. Complex according to claim 1, in which the element belonging to the lanthanide group is cerium.

4. Complex according to one of claims 1 to 3, in which n is between 0 and 20.

5. Complex according to one of claims 1 to 4, **characterised in that** the counter ion is potassium.

6. Method of preparing a ligand according to claim 1, **characterised in that** it comprises the reaction between 6-chloromethylpyridine-2-carboxylate ethyl ester and ethylenediamine in an organic medium.

7. Method of preparing a coordination complex according to any one of claims 1 to 3, **characterised in that** it comprises the reaction between europium trichloride or cerium trichloride and N,N,N',N'-tetrakis[(6-carboxypyridine-2-yl)methyl] - ethylenediamine.

8. Use of the complexes according to any one of claims 1 to 5 in luminescent probes for medical imagine or bioassays.

9. Use of a complex according to any one of claims 1 to 5 in a nanotechnology device.

## Patentansprüche

1. Koordinationskomplex eines Übcrgangsmetalls mit der allgemeinen Formel (I):
{[M(L)]X(H₂O)ₙ}ₚ
worin:
- M ein Element darstellt, das der Gruppe der Lanthanoide angehört, ausgewählt unter dem Europium, dem Cer
- L einen chromophoren, zehnzähnigen Liganden darstellt, das N, N, N', N' -tetrakis [(6-carboxypyridin-2-yl)methyl]-ethylendiamin,
- X ein Gegenion, das der Gruppe 1A des Periodensystems der Elemente angehört, darstellt.
- n die Anzahl der Wassermoleküle der Hydratisierung darstellt,
- p der Anzahl der Monomere entspricht,
- H₂O die Wassermoleküle der Hydratisierung darstellt.

2. Komplex nach Anspruch 1, wobei das Element, das der Gruppe der Lanthanide angehört, Europium ist.

3. Komplex nach Anspruch 1, wobei das Element, das der Gruppe der Lanthanide angehört, Cer ist.

4. Komplex nach einem der Ansprüche 1 bis 3, wobei n zwischen 0 und 20 liegt.

5. Komplex nach einem der Ansprüche 1 bis 4, **dadurch gekennzeichnet, dass** das Gegenion Kalium ist.

6. Verfahren zur Zubereitung eines Liganden nach Anspruch 1, **dadurch gekennzeichnet, dass** es die Reaktion zwischen dem Ethylester von 6-Chlormethylpyridin-2-Carboxylat und Ethylendiamin in organischem Medium umfasst.

7. Verfahren zur Zubereitung eines Koordinationskomplexes nach einem der Ansprüche 1 bis 3, **dadurch gekennzeichnet dass** es die Reaktion zwischen dem Europiumtrichlorid oder dem Certrichlorid und dem N, N, N', N'-tetrakis[[(6-Carboxypyridin-2-yl)Methyl]-Ethylendiamin umfasst

8. Verwendung der Komplexe nach einem der Ansprüche 1 bis 5 in lumineszenten Sensoren für medizinische Bildgebung oder Bioassays.

9. Verwendung eines Komplexes nach einem der Ansprüche 1 bis 5 in einher nanotechnologischen Vorrichtung.
